# EUROPEAN PATENT SPECIFICATION

(11) **EP 4 537 675 B1**
(45) Date of publication and mention of the grant of the patent: **02.12.2026**
(21) Application number: 23202803.5
(22) Date of filing: 10.10.2023
(51) Int. Cl.: A23L 23/00, A23L 29/212, A23L 29/219, A21D 2/08, A21D 8/06, A21D 13/043, A21D 13/13, A21D 13/14, A23J 3/14, A23L 35/00

(54) **BAKE-STABLE SAUCE**
BACKSTABILE SOSSE
SAUCE STABLE À LA CUISSON

(43) Date of publication of application: 16.04.2025
(73) Proprietor: Coöperatie Koninklijke Avebe U.A., 9641 GK Veendam (NL)
(72) Inventor: WANG, Wenju, 9641 GK Veendam (NL); DIJK-VAN DELDEN, Anna Maria, 9641 GK Veendam (NL)
(74) Representative: V.O.

(56) References cited:
- WO-A1-2023/121464
- CA-A1- 3 227 059
- US-A1- 2023 225 360

## Description

### BACKGROUND

Bakery products are sometimes provided with a creamy paste, as a filling or as a decoration. Such fillings are called bakery sauces.

Bakery sauces are generally composed of a variety of ingredients, held together by a stabilizer, such as whey protein, sodium caseinate or fiber. However, existing sauces have the problem of displaying flow during baking. This renders use as a decorative element challenging, and may hamper baking.

CA3227059 describes various food products, among which emulsified or liquid sauces. The sauces in this document are not described as bake-stable, nor as suitable for use in bakery products.

There thus remains a need for a sauce with decreased flow during baking. The present invention provides such a sauce.

### FIGURES

Figure 1: baking flow of sauces comprising various protein sources after 15 and 30 minutes of baking.
Figure 2: baking flow of sauces comprising various quantities of native patatin after 15 and 30 minutes of baking.
Figure 3: baking flow of sauces comprising various quantities of starch after 15 and 30 minutes of baking.
Figure 4: baking flow of sauces comprising various viscosifiers after 15 and 30 minutes of baking.
Figure 5: baking flow of sauces comprising various types of starch, with and without heating of the sauce while preparing the sauce, after 15 and 30 minutes of baking.
Figure 6: a) sauce of the invention as a filling in a bakery product which surrounds the sauce fully; b) sauce of the invention as a decorative taste-active ingredient on top of a bakery product prior to baking; c) sauce of the invention as a decorative taste-active ingredient on top of a bakery product after baking; d) illustrative example of a filling used in a bakery product which is open on two sides.

### DETAILED DESCRIPTION

It has now been found that a combination of starch and native patatin, when appropriately heated in an environment comprising water, provides for exceptional heat-shape stability while remaining soft rather than brittle. When starch and native patatin are combined in a sauce for use in bakery products, this leads to good bake-stability. The sauce does not flow or otherwise deform during baking, but retains a creamy mouthfeel. The invention thus provides a bake-stable sauce obtained by heating of a dispersion comprising 0 - 60 wt.% of a sugar, 0.3 - 6 wt.% of a protein isolate comprising at least 70 wt.% of native patatin, 5.1 - 15 wt.% starch and 35 - 65 wt.% of water.

A sauce, in the present context, is a viscous edible composition, preferably homogenous. A sauce in the present context does not or barely display flow before heating, meaning that upon deposition of a drop-sized portion of the sauce on a flat surface, the shape does not substantially deform, and the bottom surface area of the portion upon deposition does not significantly increase after deposition. "Not significantly", in this context, is to be interpreted as that the bottom surface area upon deposition increases less than by a factor 2, preferably less than by a factor 1.5, more preferably less than by a factor 1.25, in the period within 5 minutes after deposition.

A sauce of the invention is preferably a sauce for use in bakery products, more preferably for baking simultaneously with the dough from which the bakery product is formed. A sauce for use in bakery products does not encompass liquid or slightly viscous ("free-flowing") products conventionally consumed as a taste additive with a food product.

As such, a sauce in the present context preferably does not encompass a liquid or slightly viscous product generally provided at room temperature (20 °C), even if consumed at a slightly higher temperature (20 - 45 °C) due to heating by the food product in question ("cold" liquid or viscous products). Examples of such liquid or viscous products are mayonnaise, garlic sauce and barbecue sauce; further such products are generally known.

Nor does a sauce of the invention preferably encompass liquid or viscous products generally provided and consumed hot (46 - 90 °C; "hot" liquid or viscous products). Examples of such products are meal components, which are consumed to enhance or alter the taste of a second meal component consumed therewith. Examples of such liquid or slightly viscous products are Bolognese sauce (for enhancing the taste of for example pasta), raspberry sauce (for enhancing the taste of meat), saffron sauce (for enhancing the taste of fish), and the like.

A sauce of the invention is distinguished from liquid or slightly viscous products conventionally consumed as a taste additive with a food product either hot or cold by the higher viscosity. A mayonnaise, for example, has a viscosity of 3000 - 4000 cP; the viscosity of liquid or viscous products to be consumed hot is generally lower than this value. In contrast, a sauce of the invention does not or barely display flow before heating, meaning that the viscosity of the sauce after preparation is at least 150000 cP (mPa•s), preferably at least 160000 cP. Viscosity in this context is dynamic viscosity, as determined with a Brookfield DV2 Viscometer, with spindle 2, 3 or 4, dependent on the viscosity range (e.g. from the operating instructions), using 6 rpm at ambient temperature (20 ± 2 °C), for 30 seconds).

A sauce of the invention is further distinguished from liquid or slightly viscous products conventionally consumed as a taste additive with a food product by the property of bake-stability. A sauce of the invention is a bake-stable sauce, meaning that it is suitable to be applied in bakery products. A bake-stable sauce is a sauce suitable to be co-baked (simultaneously baked) with a dough from which a bakery product is prepared.

Bake-stable, in the present context, thus means that the sauce can be heated to temperatures normally associated with the making of bakery products, such as temperatures of at least 120 °C, preferably at least 150 °C, more preferably at least 175 °C. A temperature associated with the making of bakery products is preferably below 500 °C, more preferably below 400 °C, even more preferably below 300 °C, more preferably below 250 °C. Preferred temperatures for the preparation of bakery products under which the sauce of the invention is bake-stable comprise 120 - 500 °C, preferably 150 - 400, more preferably 175 - 300, such as 150 - 250 °C. The heating conditions during baking are generally kept constant for a period of at least 5 minutes, preferably at least 15 minutes, such as 5 - 120 minutes, preferably 15 - 90 minutes. A sauce is bake-stable when the sauce does not significantly display flow during baking.

Flow during baking can be evaluated by evaluating the extraradial flow during baking. This can be achieved by introducing a fixed quantity of sauce into a ring mold with an inner diameter D on baking paper. The ring is then removed, and the sauce is baked in an oven at an appropriate baking temperature for an appropriate time. The diameter of the baked sauce after baking is then determined, and compared to the diameter of the sauce prior to baking. The baking flow can then be calculated as $Baking flow = \left(\left({D}_{after baking}-{D}_{before baking}\right)/{D}_{before baking}\right) \times 100 %$

A sauce is bake-stable when the baking flow is less than 50 %, preferably less than 40 %, more preferably less than 25 %.

A sauce can furthermore be regarded as bake-stable by sensory evaluation. A sauce of the invention can be co-baked with the bakery product to provide a baked sauce which has a creamy paste inside. The exterior may still be flexible, or may be hard, depending on the baking conditions: a longer baking time and/or a higher baking temperature is more likely to provide for a hard outside surface of the sauce after baking. The composition of the sauce may be altered within the ranges provided herein, to optimize the result after baking for a particular baking product.

The sauce of the invention is thus suitable for use as, for example, a filling inside a bakery product, or as a decoration and/or as a taste element on top of a bakery product.

Use inside a bakery product may encompass use in which the sauce is fully surrounded by the (baked) dough, so that the sauce is not visible in the finished bakery product. Use inside a bakery product may also imply use in which the sauce is surrounded by the (baked) dough, but in which the baked dough is open on one or more sides, visibly showing the sauce on the inside of the bakery product. In such embodiments, the bakery product may be a roll, which is open on two opposite sides visibly showing the sauce inside the baked dough.

Use as a decoration and/or as a taste element on top of a bakery product implies the sauce is applied on the outside of the bakery product. The sauce may be applied in decorative figures, or evenly so as to uniformly convey taste.

As the sauce is bake-stable, it displays barely or no flow during baking. This provides the advantage, for a filling, that the sauce does not leak from the bakery product during baking, while providing a positive taste and/or mouthfeel. Furthermore, when the sauce is used as decoration and/or as a taste element on top of a bakery product, the shape is retained, thereby retaining the decorative value and furthermore preventing leakage and spilling.

A sauce of the invention is prepared from a dispersion comprising various ingredients, as detailed below.

The dispersion comprises 0 - 60 wt.% of a sugar, relative to the total weight of the dispersion. The sugar can be a monosaccharide or a disaccharide, preferably selected as one or more from the group of sucrose, fructose, glucose and lactose. In preferred embodiments, the sugar is sucrose. In further preferred embodiments, the dispersion comprises 5 - 60 wt.% of said sugar, preferably 26 - 55 wt.%, more preferably 36 - 50 wt.%, more preferably 40 - 50 wt.%, relative to the total weight of the dispersion.

The dispersion further comprises 0.3 - 6 wt.% of a protein isolate comprising at least 70 wt.%, preferably at least 75 wt.%, more preferably at least 80 wt.% native patatin, relative to the dry weight of the composition. A protein isolate comprising at least 70 wt.% of patatin relative to the dry weight can be isolated following known methods, such as for example described in WO 2014/011042. The protein content can be determined using ISO 3188.

Patatin is a protein which is naturally present in a tuber as storage protein. Storage protein is protein which functions as a store for nitrogen, sulphur and/or carbon, enabling the plant to survive periods of adverse growth conditions or between growing seasons. Patatin is generally present in a quantity of 40 - 50 wt.% of all protein in the tuber. Patatin can generally be characterized by a molecular weight of 35 - 50 kDa, preferably 38 - 45 kDa and/or by an isoelectric point of 4.8 - 5.6. The molecular weight can be determined by commonly known methods, such as SDS page. The isoelectric point can also be determined by commonly known methods, such as for example isoelectric focusing.

Native patatin, in this context, is patatin isolated from a tuber while substantially retaining the molecular features, such as three-dimensional shape, enzymatic activity and other molecular properties, as they occur in the native tuber. That is, native patatin is patatin isolated from its source that is not substantially denatured and that is not substantially degraded. The skilled person in the field of protein products for use in food is aware of the distinction between "native" protein and "denatured" or "coagulated" protein as commonly applied in the field; native protein retains the functionality associated with the protein in nature, whereas denatured or coagulated protein does not possess all functional features, and generally has lost most functionality, of the native protein, due to the processes used to obtain denatured or coagulated protein.

The protein isolate comprising at least 70 wt.%, relative to dry weight, of native patatin is preferably a tuber protein isolate, more preferably a potato protein isolate, i.e. an isolate from the tubers of Solanum tuberosum. The protein isolate is preferably a free-flowing powder, preferably with a moisture content of 5 - 12 wt.%. The protein isolate is preferably a food-grade protein isolate, meaning the isolate is suitable for use in food products intended for human consumption. A preferred protein isolate is Solanic 200 from Avebe.

The dispersion comprises 0.3 - 6 wt.% of said protein isolate, relative to the total weight of the dispersion. In preferred embodiments, the dispersion comprises 0.5 - 5 wt.% relative to the total weight of the dispersion of said protein isolate, more preferably 0.8 - 4 wt.%, even more preferably 1 - 3 wt.%. A higher quantity of native patatin in the dispersion provides for a lower baking flow, and hence a higher bake-stability.

The dispersion furthermore comprises 5.1 - 15 wt.% of starch. The starch can be of any origin, and may be waxy or non-waxy.

Starch naturally occurs in granules. Said granules consist essentially of glucose polymers amylose and amylopectin, as is generally known. Amylose is a linear polymer of glucose, and amylopectin is a branched polymer of glucose.

Waxy starch, in the present context, is defined as starch comprising at least 90 wt.% of amylopectin, preferably at least 95 wt.%. Non-waxy starch is starch which comprises less than 90 wt.% of amylopectin.

The starch can be a native starch, meaning that the glucose polymers are as they occur in nature. A native starch can be a granular starch or a gelatinized starch.

A gelatinized starch is a starch which has been subjected to a process of gelatinization. Starch gelatinization, as is generally known, has the effect that the starch granules disintegrate so as to provide a solution of amylopectin and amylose, preferably in water. To achieve this, high temperature and/or high pressure are required, as is generally known.

Upon drying a solution obtained from starch gelatinization, a gelatinized starch can be obtained in powder form. A gelatinized starch in powder form is distinguished from a starch granule in that the gelatinized starch in powder form readily dissolves in water, whereas a starch granule does not readily dissolve in water.

The starch is preferably a tuber starch, more preferably potato starch.

The starch can be a degraded starch, such as an acid-degraded starch, an oxidized starch, or an enzymatically degraded starch. Degradation means that glucose polymers have been broken, so as to attain a lower molecular weight than the non-degraded starch.

The starch is preferably a substituted starch. A substituted starch is a starch which has been modified to introduce substituents which alter the properties of the starch. A substituted starch can be a crosslinked starch or a stabilized starch, or a stabilized crosslinked starch.

A crosslinked starch is starch which has been reacted with a crosslinker. This has the effect that the glucose polymers are covalently linked, enhancing the structural integrity of the starch.

Starch crosslinking is a process in which starch (in granular form or as a solution) is reacted with a bifunctional or polyfunctional electrophilic reagent suitable for a nucleophilic substitution or addition reaction. Such bifunctional or polyfunctional reagents are called crosslinkers. Crosslinkers are able to react at least twice with glucose hydroxyl groups thereby crosslinking intra or intermolecularly amylose and/or amylopectin chains. Methods to crosslink starch are well known to the person skilled in the art. Reference is made to O.B. Wurzburg, CRC Press, 1986, Modified Starches: Properties and Uses.

Well known types of crosslinked starch include phosphate-crosslinked starch (e.g. trimetaphosphate-crosslinked starch), phosphoryl chloride crosslinked starch, adipate crosslinked starch, dicarboxylic acid crosslinked starch, tricarboxylic acid crosslinked starch, or mixtures thereof The degree of crosslinking ("DC") of a crosslinked starch is at least 0.0001 mol crosslinker/mol starch ("mol/mol").

The substituted starch can also be a stabilized starch. A stabilized starch is a starch which has been substituted with chemical groups, so as to provide altered starch properties. Starch stabilization is distinct from starch crosslinking in that a chemical group in stabilized starch is attached on one point of one starch glucose polymer, whereas in crosslinking the chemical group is attached to two or more points of the glucose polymer(s), thereby providing crosslinks.

A stabilized starch can for example be a starch alkyl ether or a starch alkyl ester, such as for example a hydroxypropylated starch, an acetylated starch, an octenyl succinated starch. How to prepare a stabilized starch is generally known. Stabilized starch types are also commercially available.

The stabilized starch has a degree of substitution in line with the applicable food laws. These are generally known, for each starch type. Preferably, the degree of substitution is at least 0.01 mol/mol, preferably at least 0.05 mol/mol. The degree of substitution ("DS") is the quantity of reagent bound to starch, expressed as mol bonded reagent per mol Anhydro Glucose Unit (AGU). The molecular weight of 1 mol AGU is 162 g/mol. As each AGU has three available hydroxyl groups, the maximum DS is three. The degree of substitution can be measured by methods know in the art for quantification of the degree of substitution.

In much preferred embodiments, the starch is a stabilized and crosslinked starch, such as a waxy stabilized and crosslinked starch, or a non-waxy stabilized crosslinked starch.

Preferred types of starch are phosphate-crosslinked starch (e.g. E1412), acetylated adipate crosslinked starch (e.g. E 1422), acetylated phosphate crosslinked starch (E1414), and hydroxypropylated phosphate crosslinked starch (e.g. E 1442), most preferably hydroxypropylated phosphate crosslinked starch (e.g. E 1442).

The quantity of starch in the dispersion is 5.1 - 15 wt.%, preferably 6 - 12 wt.%. The higher the quantity of starch, the higher the viscosity of the resulting sauce.

The dispersion further comprises 35 - 65 wt.% of water. Water is preferably food-grade and may for example be mains water.

The bake-stable sauce is obtained by heating the dispersion. Heating is preferably performed while mixing, in order to facilitate enhanced homogenization. Heating is to a temperature of at least 75 °C, more preferably at least 80 °C, more preferably at least 85 °C, more preferably at least 90 °C. The temperature is below 110 °C, more preferably below 100 °C. The temperature for heating the dispersion is 75 - 110 °C, preferably 80 - 100 °C, such as 85 - 100 °C. The temperature is preferably kept constant at the recited temperature for a period sufficient to obtain a sauce. Lower temperatures generally require longer heating times to obtain a sauce, and higher temperatures generally require shorter heating times to obtain a sauce.

The temperature is generally kept constant for a period of at least 1 minute, preferably at least 2 minutes, preferably at least 3 minutes, in order to obtain the sauce. The time for which the temperature is kept constant is preferably not very long. The maximum time is at most 120 minutes, preferably at most 60 minutes, more preferably at most 30 minutes, most preferably at most 15 minutes. The time for which the temperature is kept constant is 1 - 120 minutes, preferably 2 - 60 minutes, preferably 3 - 30 minutes, such as 2 - 15 minutes or 3 - 60 minutes.

The bake-stable sauce does not comprise a lipid. This provides sauce with a different mouthfeel and texture, appropriate for some applications.

In preferred embodiments, the bake-stable sauce comprises one or more colorants and/or one or more flavorings. Colorants and flavorants are generally known in the art. Salt, such as sodium or potassium chloride, is a preferred flavoring, and beta-carotene is a preferred colorant. The one or more colorants and/or one or more flavorings may be added to the sauce after heating of the dispersion applying appropriate homogenization. Alternatively and preferably, said one or more colorants and/or one or more flavorings may be added to the dispersion prior to (or during) heating.

The bake-stable sauce of the invention preferably has a water activity of 0.5 - 0.97, more preferable 0.6 - 0.85.

The invention furthermore provides a method for obtaining a bake-stable sauce, such as for use in bakery products, comprising
a) providing a dispersion comprising 0 - 60 wt.% of a sugar, 0.3 - 6 wt.% of a protein isolate comprising at least 70 wt.% of native patatin, 5.1 - 15 wt.% starch and 35 - 65 wt.% of water, as defined above;
b) heating the dispersion to a temperature of 75 - 110 °C for a period of 1 - 120 minutes.

The dispersion can be provided by providing the separate ingredients and combining them, preferably in a vessel such as a pan, jar or pot. The vessel is preferably selected so as to allow mixing and heating, thereby avoiding the need for transferring of the dispersion during the preparation of the sauce. Preferably, the dispersion is provided by mixing of the listed ingredients and any optional components, prior to the heating step.

Heating of the dispersion can be achieved by any conventional means, such as in an oven, on a stove, or in an appropriate heating chamber. The heating conditions suitable for obtaining a sauce of the invention have been described elsewhere.

The dispersion is preferably heated while mixing. In preferred embodiments, the dispersion is premixed prior to heating, and subsequently subjected to heating while mixing.

Mixing can be achieved by any conventional means, such as by stirring, shaking or tumbling, or by the use of pumps or steam injection.

The bake-stable sauce is preferably a sauce for use in bakery products. Consequently, the invention also provides a bakery product comprising the sauce described above.

The bakery product can be a pastry, bread, doughnut, croissant, or bun, and may be provided in the form of a frozen (unbaked) dough. These bakery products, and the methods to produce them, are generally known in the art.

The bakery product can be a vegetarian or vegan bakery product, most preferably vegetarian. The bakery product may thus further comprise milk or egg, as is known in the art.

The invention furthermore provides a method for obtaining a bakery product, comprising providing a dough, combining the dough with the bake-stable sauce defined above, and baking the dough to obtain the bakery product.

The dough is preferably suitable for obtaining the bakery product in question. Preferred types of bakery products have been described above. The dough preferably comprises at least flour and water, and furthermore may comprise one or more of a lipid, a sugar, and further ingredients, as is generally known in the art.

The dough is combined with the bake-stable sauce described above. Said combining may be achieved by introducing the sauce into, upon or around the dough in question. Subsequently, the dough is baked under heating conditions normally associated with the making of bakery products, as described above. The heating conditions are selected such that they are appropriate for obtaining the type of bakery product in question. Optionally, the dough with the bake-stable sauce may be frozen and dispatched as a ready-made bakery product.

### EXAMPLES

### Materials

Please provide commercial names (or method of production, or a reference to a method) for
Protein: Solanic 200 of Avebe, a protein isolate comprising 85 wt.% of native patatin relative to dry matter.
Faba bean protein Univar, Faba bean protein 60 DEFLAN
Whey protein WPC 80
SP1: Isolate soy protein powder, from Nature's Garden Strawberry, protein content 90 %;
SP2: Soy protein concentrate form ADM, protein content 90%
Pea protein: pea protein isolate from Cosucra, PisaneBa
Pumpkin seed protein: ETProtein, China
Sodium caseinate: Acros Organics
MCC: Methocel K4M Dow
Carrageenan: Cargill SATIAGEL ACL 15SB
Starch is Eliane VE580 from Avebe, a crosslinked hydroxypropylated waxy potato starch, unless otherwise indicated.

### Preparation

Sauces are prepared by dispersing the indicated ingredients in the indicated quantity of water, in a Thermomix. The dispersions were heated while mixing to a temperature of 95 °C, and kept at 95 °C for 5 minutes under continued mixing. Subsequently, the mixture was allowed to cool to room temperature to obtain a sauce.

### Bake-stability

Bake-stability of the sauces is evaluated by determination of the degree of flow which occurs during baking, the "baking flow". Baking flow was determined by fully filling a ring mold of diameter 62mm and height 30mm with the sauce on baking paper. The ring mold was removed, and the sauce was baked in an oven at 200 °C for 15 or 30 minutes. The diameter of the baked sauce after baking for 15 or 30 minutes was determined, and compared to the diameter of the sauce prior to baking. The baking flow was calculated as $Baking flow = \left(\left({D}_{after baking}-{D}_{before baking}\right)/{D}_{before baking}\right) \times 100 %$

### Viscosity

Viscosity of the sauce before baking was determined using a Brookfield DV2 Viscometer, with spindle 2, 3 or 4, dependent on the viscosity range according to the operating instructions using 6 rpm at ambient temperature (20 ± 2 °C), for 30 seconds.

### Sensory evaluation

Sauces were evaluated for sensory characteristics after baking. Sensory analysis was performed by assigning a 5-point scale, as follows:
1. Burned.
2. Hard and dry.
3. Outer surface burned but sauce-like creamy paste inside.
4. Outer surface hard, creamy paste inside.
5. Outer surface flexible, creamy paste inside.

### Example 1: baking flow of different proteins

Sauces were prepared using different protein isolates. The ingredients for sauces 1 - 8 are

| ingredient | Wt.% (of total composition) |
|---|---|
| protein | 2 |
| sugar | 45 |
| Beta-carotene | 0.1 |
| Starch | 7 |
| Water | to 100 |

A different source for protein was used for each sauce, each source providing native protein: Solanic 200 (comprising 85 wt.% native patatin; sauce 1), faba bean protein (sauce 2), whey protein (sauce 3), SP1 (sauce 4), SP2 (sauce 5), pea protein (sauce 6), pumpkin seed protein (sauce 7) and sodium caseinate (sauce 8).

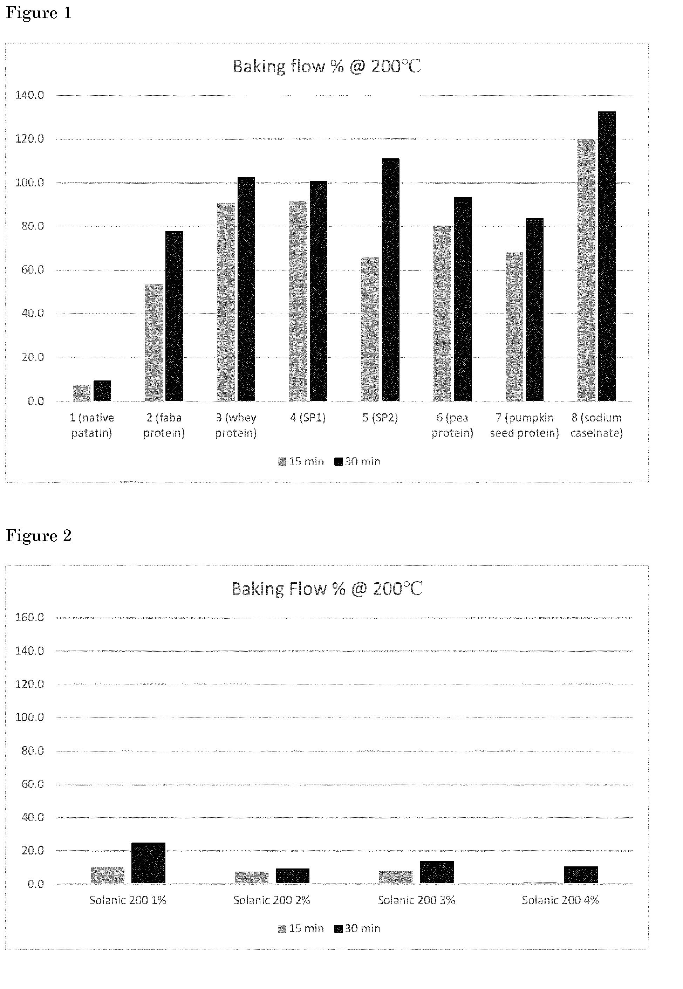

The sauces were evaluated for bake stability. The results are shown in table 1 and Figure 1.

**Table 1: baking flow of sauces comprising various protein sources after 15 and 30 minutes of baking.**

| Formula | 15 min | 30 min |
|---|---|---|
| 1 (native patatin) | 7.0 | 9.1 |
| 2 (faba protein) | 53.4 | 77.4 |
| 3 (whey protein) | 90.2 | 102.3 |
| 4 (SP1) | 91.5 | 100.4 |
| 5 (SP2) | 65.5 | 110.7 |
| 6 (pea protein) | 80.1 | 93.2 |
| 7 (pumpkin seed protein) | 67.9 | 83.4 |
| 8 (sodium caseinate) | 119.8 | 132.3 |

The results show that native patatin provides for a high bake-stability, higher than any other native protein source tested.

### Example 2: variation in the quantity of native patatin

Sauces were prepared using different quantities of native patatin, on the basis of Solanic 200 as protein source. The ingredients for sauces 9 - 12 are

| ingredient | Wt.% (of total composition) |
|---|---|
| protein | 1, 2, 3, 4 |
| sugar | 45 |
| Beta-carotene | 0.1 |
| Starch | 7 |
| Water | to 100 |

The sauces were evaluated for bake stability. The results are shown in table 2 and Figure 2.

**Table 2: baking flow of sauces comprising various quantities of native patatin after 15 and 30 minutes of baking.**

| formula | | 15 min | 30 min |
|---|---|---|---|
| 9 | Solanic 200 1% | 9.6 | 24.6 |
| 1 | Solanic 200 2% | 7.0 | 9.1 |
| 10 | Solanic 200 3% | 7.3 | 13.4 |
| 11 | Solanic 200 4% | 0.7 | 10.3 |

The results show that in the range of 0.3 - 6 wt.% patatin, bake-stable sauces can be obtained.

### Example 3: variation in the quantity of starch

Sauces were prepared using different quantities of starch, on the basis of Solanic 200 as protein source. The ingredients for sauces 13 - 16 are

| ingredient | Wt.% (of total composition) |
|---|---|
| protein | 2 |
| sugar | 45 |
| Beta-carotene | 0.1 |
| Starch | 3, 5, 7, 9 |
| Water | to 100 |

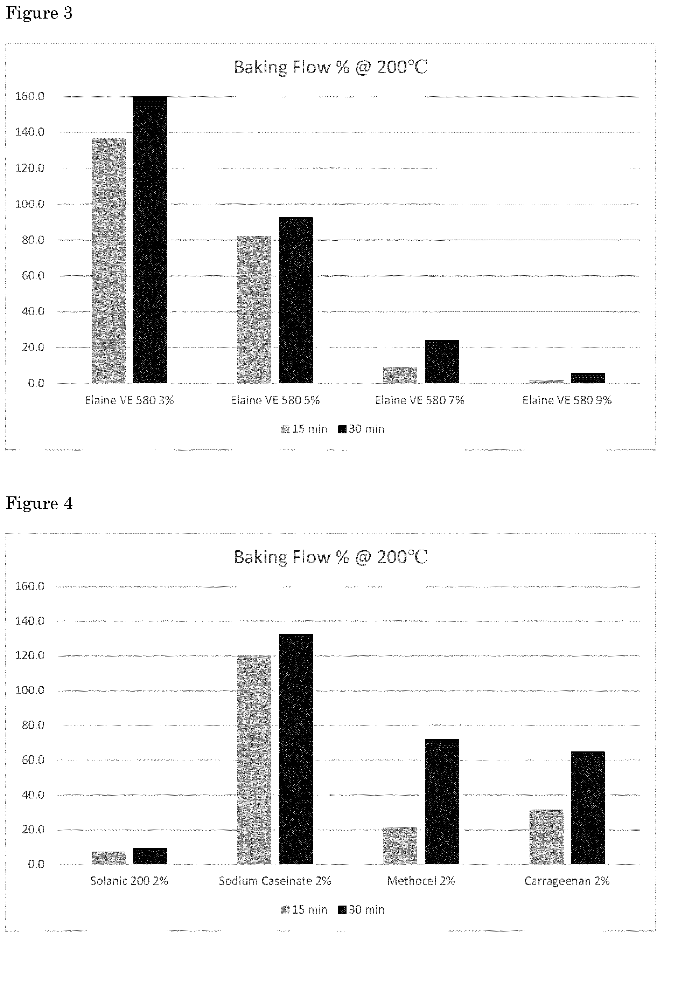

The sauces were evaluated for bake stability. The results are shown in table 3 and Figure 3.

**Table 3: baking flow of sauces comprising various quantities of starch after 15 and 30 minutes of baking.**

| formula | | 15 min | 30 min |
|---|---|---|---|
| 12 | Elaine VE 580 3% | 136.4 | 179.3 |
| 13 | Elaine VE 580 5% | 81.7 | 92.3 |
| 14 | Elaine VE 580 7% | 8.7 | 24.0 |
| 15 | Elaine VE 580 9% | 1.8 | 5.6 |

The results show that in order to obtain a sauce with high bake stability, at least 5.1 wt.% of starch is needed.

### Example 4: variation in the viscosifier

Sauces were prepared using different viscosifiers. The ingredients for sauces 1, 8 and 16 - 17 are

| ingredient | Wt.% (of total composition) |
|---|---|
| Protein or gum | 2 |
| sugar | 45 |
| Beta-carotene | 0.1 |
| Starch | 7 |
| Water | to 100 |

The sauces were evaluated for bake stability. The results are shown in table 4 and Figure 4.

**Table 4: baking flow of sauces comprising various viscosifiers after 15 and 30 minutes of baking.**

| formula | | 15 min | 30 min |
|---|---|---|---|
| 1 | Solanic 200 2% | 7.0 | 9.1 |
| 8 | Sodium Caseinate 2% | 119.8 | 132.3 |
| 16 | Carrageenan 2% | 31.2 | 64.5 |

The results show that native patatin provides for the best bake stability of all viscosifiers tested.

### Example 5: variation in the starch source

Sauces were prepared using different types of starch, and different processing. A pregelatinized crosslinked and stabilized potato starch was used, Paselli BC. Sauces were prepared by combining the ingredients as a dispersion in water, and mixing the dispersion with and without heating to a temperature of 95 °C as described above. For sauces not subjected to heating, the time of mixing the dispersion was 15 minutes.

The ingredients for sauces 1, 17, 18 and 19 are

| ingredient | Wt.% (of total composition) |
|---|---|
| Protein | 2 |
| sugar | 45 |
| Beta-carotene | 0.1 |
| Starch | 7 |
| Water | to 100 |

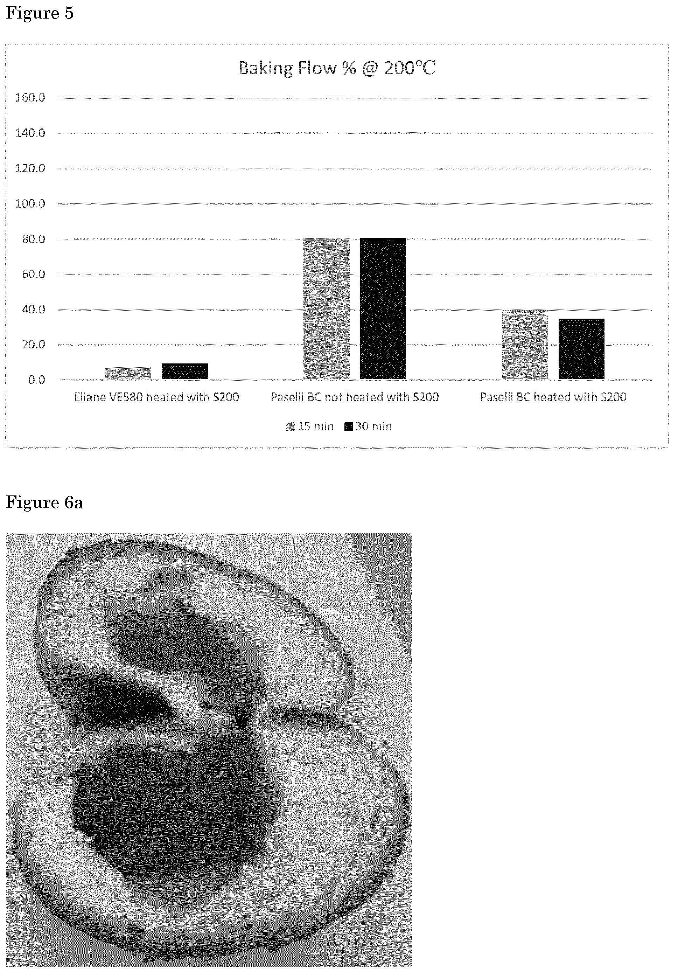

The dispersion comprising Eliane VE580 and Solanic 200 ("S200") did not form a sauce without heating. The dispersion comprising Paselli BC and S200 did form a sauce without heating, although the sauce did not display the improved bake stability. The dispersion comprising Paselli BC and S200 which was subjected to heating while mixing as described above formed a sauce with improved bake stability. The results are shown in table 5 and Figure 5.

**Table 5: baking flow of sauces comprising various types of starch, with and without heating of the sauce while preparing the sauce, after 15 and 30 minutes of baking.**

| formula | | 15 min | 30 min |
|---|---|---|---|
| 1 | Eliane VE580 heated with S200 | 7.0 | 9.1 |
| 17 | Eliane VE580 not heated with S200 | No sauce formed | |
| 18 | Paselli BC not heated with S200 | 80.2 | 80.5 |
| 19 | Paselli BC heated with S200 | 34.6 | 39.4 |

The results show that different starch types may be used to form the sauce. The results furthermore show that the sauce derives its properties from the interaction between gelatinized starch and native patatin while heating.

### Example 6: sauces further comprising a lipid. (not according to the present invention).

A sauce was prepared following the method described above, on the basis of the following ingredients (sauce 20):

| ingredient | Wt.% (of total composition) |
|---|---|
| Protein | 2 |
| sugar | 45 |
| Beta-carotene | 0.15 |
| Starch | 7 |
| Sunflower oil | 5 |
| Water | 40.85 |

The sauce displayed excellent bake-stability, and retained a tasty creamy texture after baking.

### Example 7: bakery products

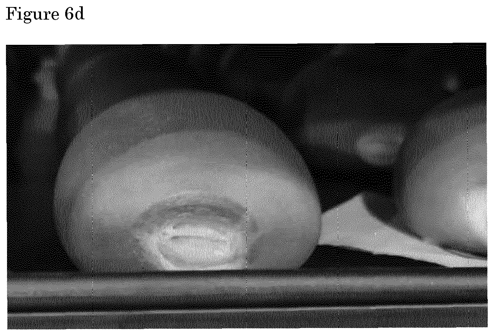

Sauce 1 and sauce 20 were introduced as a filling into a bakery product, by rolling the sauce into a dough leaving two ends open (Figure 6d), and by encapsulating the sauce fully in a dough (Figure 6a). In addition, the sauces were applied on top of a dough as a taste-active decoration. In all instances, the dough was a regular bread dough, comprising wheat flour, water, salt and yeast.

The dough was baked with the sauce for 30 minutes at 180 °C (sauce on top) or for 30 minutes at 200 °C (sauce inside).

After baking, the bakery products comprised a tasty and creamy sauce, which had retained its shape substantially without flowing. Thus, decorative sauces on top of the bakery product retained appearance as well as creaminess, and sauces introduced as filling did not leak out of the bakery product.

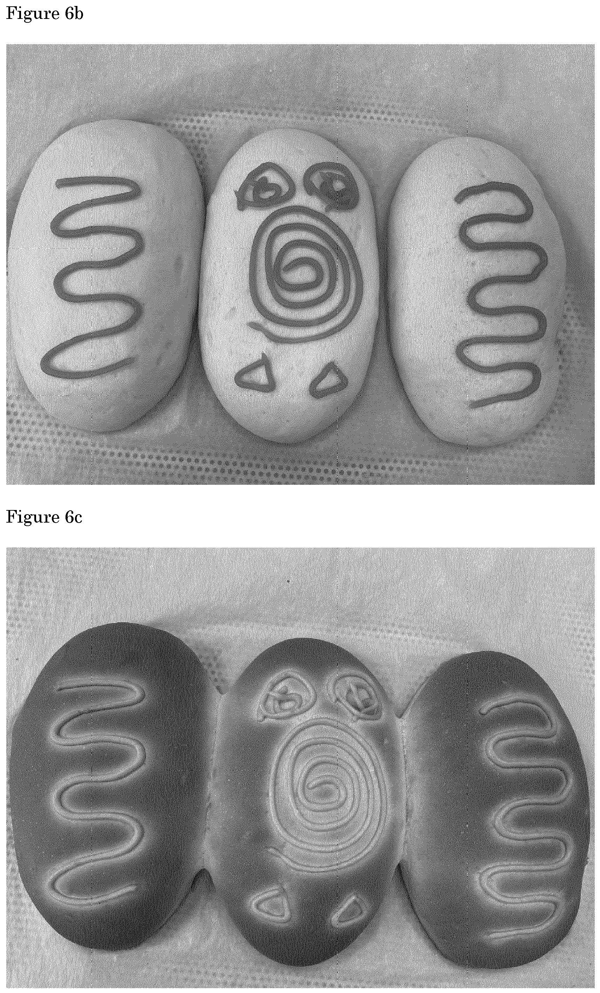

Representative pictures of bakery products comprising the sauce of the invention are shown in Figure 6.

**Table 6: summary of all results**

| Formula number | **1** | 2 | 3 | 4 | 5 | 6 | 7 | 8 | **9** | **10** | **11** | 12 | 13 | **14** | **15** | 16 | 18 | **19** |
|---|---|---|---|---|---|---|---|---|---|---|---|---|---|---|---|---|---|---|
| **Ingredients** | | | | | | | | | | | | | | | | | | |
| Sugar | **45** | 45 | 45 | 45 | 45 | 45 | 45 | 45 | **45** | **45** | **45** | 45 | 45 | **45** | **45** | 45 | 45 | **45** |
| Beta- carrotene | **0.1** | 0.1 | 0.1 | 0.1 | 0.1 | 0.1 | 0.1 | 0.1 | **0.1** | **0.1** | **0.1** | 0.1 | 0.1 | **0.1** | **0.1** | 0.1 | 0.1 | **0.1** |
| Starch (Elaine VE580) | **7** | 7 | 7 | 7 | 7 | 7 | 7 | 7 | **7** | **7** | **7** | 3 | 5 | **7** | **9** | 7 | | |
| Water | **45.9** | 45.9 | 45.9 | 45.9 | 45.9 | 45.9 | 45.9 | 45.9 | **46.9** | **44.9** | **43.9** | 49.9 | 47.9 | **45.9** | **43.9** | 45.9 | 45.9 | **45.9** |
| Solanic 200 | **2** | | | | | | | | **1** | **3** | **4** | 2 | 2 | **2** | **2** | | 2 | **2** |
| Faba Protein | | 2 | | | | | | | | | | | | | | | | |
| WPC 80 | | | 2 | | | | | | | | | | | | | | | |
| SP1 | | | | 2 | | | | | | | | | | | | | | |
| SP2 | | | | | 2 | | | | | | | | | | | | | |
| Pea protein | | | | | | 2 | | | | | | | | | | | | |
| Pumpkin seed protein | | | | | | | 2 | | | | | | | | | | | |
| Sodium Caseinate | | | | | | | | 2 | | | | | | | | | | |
| Starch (Paselli BC) | | | | | | | | | | | | | | | | | 7 | 7 |
| Carrageenan | | | | | | | | | | | | | | | | 2 | | |
| | | | | | | | | | | | | | | | | | | |

| **Results** | | | | | | | | | | | | | | | | | | |
|---|---|---|---|---|---|---|---|---|---|---|---|---|---|---|---|---|---|---|
| Viscosity before baking (cP*10⁴) | **67.8** | 46.7 | 30.7 | 30.1 | 41.3 | 33.0 | 33.2 | 18.2 | **48.5** | **84.7** | **122** | 1.5 | 33.8 | **67.8** | **147** | **153** | 5.2 | **16.8** |
| Sensory evaluation (15 min) | **5** | 3 | 3 | 3 | 3 | 3 | 3 | 2 | **5** | **5** | **5** | 1 | 3 | **5** | **5** | 3 | 3 | **5** |
| Sensory evaluation (30 min) | **4** | 2 | 2 | 2 | 2 | 2 | 2 | 1 | **4** | **4** | **4** | 1 | 2 | **4** | **4** | 2 | 2 | **3** |
| Bake stability (15 min) | **7.0** | 53.4 | 90.2 | 91.5 | 65.5 | 80.1 | 67.9 | 119.8 | **9.6** | **7.3** | **0.7** | 136.4 | 81.7 | **8.7** | **1.8** | 31.2 | 80.5 | **39.4** |
| Bake stability (30 min) | **9.1** | 77.4 | 102.3 | 100.4 | 110.7 | 93.2 | 83.4 | 132.3 | **24.6** | **13.4** | **10.3** | 179.3 | 92.3 | **24** | **5.6** | 64.5 | 80.2 | 34.6 |

## Claims

1. A bake-stable sauce not comprising a lipid, which bake-stable sauce is obtained by heating to a temperature of 75 - 110 °C for a period of 1 - 120 minutes of a dispersion comprising 0 - 60 wt.% of a sugar, 0.3 - 6 wt.% of a protein isolate comprising at least 70 wt.% relative to dry weight of native patatin, 5.1 - 15 wt.% starch and 35 - 65 wt.% of water.

2. A bake-stable sauce according to claim 1, wherein the sugar comprises sucrose, fructose, glucose or lactose, preferably sucrose.

3. A bake-stable sauce according to any of claims 1 - 2, wherein the starch is a crosslinked starch.

4. A bake-stable sauce according to any of claims 1 - 3, wherein the starch is a stabilized starch.

5. A bake-stable sauce according to any of claims 1 - 4, wherein the starch is a tuber starch, preferably potato starch.

6. A bake-stable sauce according to any of claims 1 - 5, further comprising one or more colorants and/or one or more flavorings.

7. A bake-stable sauce according to any of claims 1 - 6, comprising 5 - 60 wt.% of said sugar, preferably 26 - 55 wt.%, more preferably 36 - 50 wt.%.

8. A bakery product, comprising the bake-stable sauce of any of claims 1 - 7.

9. A method for obtaining a bake-stable sauce not comprising a lipid for use in bakery products, comprising
a) providing a dispersion comprising 0 - 60 wt.% of a sugar, 0.3 - 6 wt.% of a protein isolate comprising at least 70 wt.% relative to dry weight of native patatin, 5.1 - 15 wt.% starch and 35 - 65 wt.% of water, as defined in any of claims 1 - 7;
b) heating the dispersion to a constant temperature of 75 - 110 °C for a period of 1 - 120 minutes.

10. A method according to claim 9, wherein the dispersion is mixed during heating.

11. A method according to claim 9 or 10, wherein the dispersion is heated for 2 - 60 minutes.

12. A method for obtaining a bakery product, comprising providing a dough, introducing the heat-stable sauce defined in any of claims 1 - 7 into, upon or around the dough, and baking the dough to obtain the bakery product.

## Patentansprüche

1. Backstabile Soße, nicht umfassend ein Lipid, wobei die backstabile Soße erhalten wird, durch Erhitzen einer Dispersion, umfassend 0 bis 60 Gew.-% eines Zuckers, 0,3 bis 6 Gew.-% eines Proteinisolats, umfassend mindestens 70 Gew.-%, bezogen auf das Trockengewicht nativen Patatins, 5,1 bis 15 Gew.-% Stärke und 35 bis 65 Gew.-% Wasser, auf eine Temperatur von 75 bis 110 °C für einen Zeitraum von 1 bis 120 Minuten .

2. Backstabile Soße nach Anspruch 1, wobei der Zucker Saccharose, Fructose, Glucose oder Lactose umfasst, vorzugsweise Saccharose.

3. Backstabile Soße nach einem der Ansprüche 1 bis 2, wobei die Stärke eine vernetzte Stärke ist.

4. Backstabile Soße nach einem der Ansprüche 1 bis 3, wobei die Stärke eine stabilisierte Stärke ist.

5. Backstabile Soße nach einem der Ansprüche 1 bis 4, wobei die Stärke eine Knollenstärke ist, vorzugsweise Kartoffelstärke.

6. Backstabile Soße nach einem der Ansprüche 1 bis 5, ferner umfassend einen oder mehrere Farbstoffe und/oder einen oder mehrere Aromastoffe.

7. Backstabile Soße nach einem der Ansprüche 1 bis 6, umfassend 5 bis 60 Gew.-% des Zuckers, vorzugsweise 26 bis 55 Gew.-%, bevorzugter 36 bis 50 Gew.-%.

8. Backware, umfassend die backstabile Soße nach einem der Ansprüche 1 bis 7.

9. Verfahren zum Erhalten einer backstabilen Soße, nicht umfassend ein Lipid, zur Verwendung in Backwaren, umfassend
a) Bereitstellen einer Dispersion, umfassend 0 bis 60 Gew.-% eines Zuckers, 0,3 bis 6 Gew.-% eines Proteinisolats, umfassend mindestens 70 Gew.-%, bezogen auf das Trockengewicht nativen Patatins, 5,1 bis 15 Gew.-% Stärke und 35 bis 65 Gew.-% Wasser, wie in einem der Ansprüche 1 bis 7 definiert;
b) Erhitzen der Dispersion auf eine konstante Temperatur von 75 bis 110 °C für einen Zeitraum von 1 bis 120 Minuten.

10. Verfahren nach Anspruch 9, wobei die Dispersion während des Erhitzens gemischt wird.

11. Verfahren nach Anspruch 9 oder 10, wobei die Dispersion für 2 bis 60 Minuten erhitzt wird.

12. Verfahren zum Erhalten einer Backware, umfassend Bereitstellen eines Teigs, Einbringen der backstabilen Soße, definiert in einem der Ansprüche 1 bis 7,in, auf oder um den Teig und Backen des Teigs um die Backware zu erhalten.

## Revendications

1. Sauce stable à la cuisson ne comprenant pas de lipide, laquelle sauce stable à la cuisson est obtenue par chauffage à une température de 75 à 110°C pendant une durée de 1 à 120 minutes d'une dispersion comprenant de 0 à 60 % en poids d'un sucre, de 0,3 à 6 % en poids d'un isolat de protéines comprenant au moins 70 % en poids par rapport au poids sec de patatine native, de 5,1 à 15 % en poids d'amidon et de 35 à 65 % en poids d'eau.

2. Sauce stable à la cuisson selon la revendication 1, dans laquelle le sucre comprend du saccharose, du fructose, du glucose ou du lactose, de préférence du saccharose.

3. Sauce stable à la cuisson selon l'une quelconque des revendications 1 et 2, dans laquelle l'amidon est un amidon réticulé.

4. Sauce stable à la cuisson selon l'une quelconque des revendications 1 à 3, dans laquelle l'amidon est un amidon stabilisé.

5. Sauce stable à la cuisson selon l'une quelconque des revendications 1 à 4, dans laquelle l'amidon est un amidon de tubercule, de préférence de l'amidon de pomme de terre.

6. Sauce stable à la cuisson selon l'une quelconque des revendications 1 à 5, comprenant en outre un ou plusieurs colorants et/ou un ou plusieurs arômes.

7. Sauce stable à la cuisson selon l'une quelconque des revendications 1 à 6, comprenant de 5 à 60 % en poids dudit sucre, de préférence de 26 à 55 % en poids, de préférence encore de 36 à 50 % en poids.

8. Produit de boulangerie comprenant la sauce stable à la cuisson selon l'une quelconque des revendications 1 à 7.

9. Procédé d'obtention d'une sauce stable à la cuisson ne comprenant pas de lipide destinée à être utilisée dans des produits de boulangerie, comprenant:
a) la fourniture d'une dispersion comprenant de 0 à 60 % en poids d'un sucre, de 0,3 à 6 % en poids d'un isolat de protéines comprenant au moins 70 % en poids par rapport au poids sec de patatine native, de 5,1 à 15 % en poids d'amidon et de 35 à 65 % en poids d'eau, telle que définie dans l'une quelconque des revendications 1 à 7;
b) le chauffage de la dispersion à une température constante de 75 à 110°C pendant une durée de 1 à 120 minutes.

10. Procédé selon la revendication 9, dans lequel la dispersion est mélangée pendant le chauffage.

11. Procédé selon la revendication 9 ou 10, dans lequel la dispersion est chauffée pendant 2 à 60 minutes.

12. Procédé d'obtention d'un produit de boulangerie, comprenant la fourniture d'une pâte, l'introduction de la sauce stable à la chaleur définie dans l'une quelconque des revendications 1 à 7 dans, sur ou autour de la pâte, et la cuisson de la pâte pour obtenir le produit de boulangerie.
